# EUROPÄISCHE PATENTSCHRIFT

(11) **EP 0 329 055 B1**
(45) Veröffentlichungstag und Bekanntmachung des Hinweises auf die Patenterteilung: **03.02.1993**
(21) Anmeldenummer: 89102451.5
(22) Anmeldetag: 13.02.1989
(51) Int. Cl.: B64D 17/40, B64D 17/64

(54) **Reservefallschirm mit Hilfs- oder Pilotschirm**
Reserve parachute with a pilot chute
Parachute de réserve muni d'un parachute pilote

(30) Priorität: 18.02.1988 DE 3805085
(43) Veröffentlichungstag der Anmeldung: 23.08.1989
(73) Patentinhaber: Ertler, Stefan, D-68723 Schwetzingen (DE)
(72) Erfinder: Ertler, Stefan, D-68723 Schwetzingen (DE)
(74) Vertreter: Lehmann, Klaus, Dipl.-Ing.

(56) Entgegenhaltungen:
- CH-A- 141 740
- DE-C- 661 220
- FR-A- 2 502 580
- US-A- 3 908 937

## Beschreibung

Die Erfindung betrifft einen Reservefallschirm mit Hilfs- oder Pilotschirm entsprechend dem Oberbegriff des Anspruchs 1.

Ein solcher Reservefallschirm ist in der Praxis als POP-TOP bekannt. Wenn beim Fallschirmspringen der Hauptfallschirm nicht funktioniert und deswegen vom Fallschirmspringer abgeworfen wird, muß der Reservefallschirm sicher funktionieren. Zur Einleitung und Bewirkung des Öffnens des Reservefallschirms dient dabei ein kleiner Hilfs- oder Pilotschirm, der mit dem Reservefallschirm verbunden ist und der sich beim Auslösen so schnell wie möglich öffnen muß. Hierzu dient die in Verbindung mit dem Hilfs- oder Pilotschirm vorgesehene Druckfeder, die diesen beim Auslösen nach außen schleudert und in den am Springer vorbeigehenden Luftstrom eintreten läßt, worauf durch den Pilotschirm der Reservefallschirm aus seiner Verpackung gezogen und geöffnet wird. Bei der bekannten Anordnung, die im einzelnen unten näher beschrieben wird, dienen zum Halten und Auslösen des Pilotschirms zwei geschützt am Boden der Verpackung hinter dem Rücken des Fallschirmspringers liegende Auslösestifte, die von einem Handgriff aus mittels eines Zugkabels aus den zugehörigen Verschlußschlaufen herausgezogen werden können. Der Reservefallschirm wird vom Fallschirmspringer nach Art eines Rucksacks auf dem Rücken getragen, und am Gurtzeug ist der Handgriff für die Auslösestifte vorgesehen. Durch das Herausziehen der Auslösestifte werden die Verschlußschlaufen frei, so daß die Druckfeder sich entspannen und dabei den Pilotschirm auswerfen kann.

Die bekannte Anordnung ist, wie unten noch im einzelnen erläutert wird, recht aufwendig und außerdem umständlich zu handhaben, wobei auch die Möglichkeit besteht, daß die Druckfeder verkantet und dadurch den Pilotschirm nicht einwandfrei auswirft.

Der Erfindung liegt demgemäß die Aufgabe zugrunde, bei einem Reservefallschirm der gattungsgemäßen Art die Anordnung und Handhabung des Hilfs-oder Pilotschirms zu vereinfachen sowie vielseitiger und sicherer zu machen.

Erfindungsgemäß wird dies durch die im kennzeichnenden Teil des Anspruchs 1 angegebenen Maßnahmen in Verbindung mit dessen Oberbegriff erreicht.

Durch Anordnung nur einer einzigen zentralen Verschlußschlaufe und eines entsprechenden einzigen Auslösestifts wird nicht nur die Konstruktion und die Handhabung vereinfacht, sondern es wird sichergestellt, daß beim Auslösen die Druckfeder sich verhältnismäßig genau entlang ihrer zentralen Achse entspannt und somit auch den Pilotschirm ordnungsgemäß in den am fallenden Fallschirmspringer vorbeistreichenden Luftstrom auswirft, damit anschließend der Reservefallschirm sich ordnungsgemäß öffnet.

Weitere Vorteile und Einzelheiten der Erfindung ergeben sich aus den Unteransprüchen sowie aus der folgenden Beschreibung, die an Hand der Zeichnung zunächst den vorbekannten Stand der Technik und anschließend ein Ausführungsbeispiel der Erfindung im einzelnen erläutert.
- Fig. 1: ist eine schematische perspektivische Ansicht, teilweise im Schnitt, eines bekannten Reservefallschirms mit Hilfs- oder Pilotschirm;
- Fig. 2: ist eine entsprechende Ansicht eines Ausführungsbeispiels der erfindungsgemäßen Anordnung.

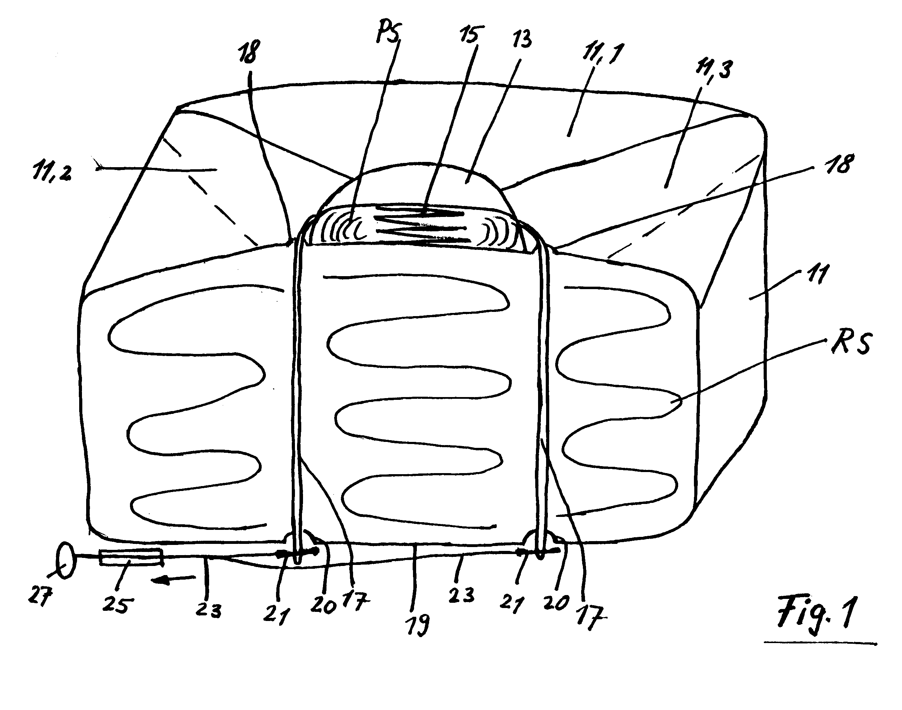

In Fig. 1 ist eine Verpackung 11 für einen Reservefallschirm RS schematisch dargestellt, die allgemein die Form eines Rucksacks haben kann. Einzelheiten der Verpackung, insbesondere deren Gurtzeug, sind nicht dargestellt. Die Verpackung 11 enthält den zusammengelegten Reservefallschirm RS. Beim Verpacken werden an der Oberseite der Verpackung 11 nacheinander vier einzelne Klappen umgelegt, von denen nur drei dargestellt sind. Zunächst wird von hinten die Klappe 11,1 nach vorn über den Reservefallschirm RS gefaltet; anschließend wird von links die Klappe 11,2 und dann von rechts die Klappe 11,3 darüber gefaltet, so daß in der Zeichnung die seitliche Begrenzung der Klappe 11,1 gestrichelt erscheint. Auf der verschlossenen Verpackung 11 liegt ein zusammengelegter Hilfs- oder Pilotschirm PS, der über geeignete, nicht dargestellte Verbindungsmittel, im wesentlichen Schnüre, mit dem in der Verpackung 11 befindlichen Reservefallschirm RS verbunden ist. Innerhalb des Hilfs- oder Pilotschirms PS befindet sich eine zusammengedrückte Druckfeder 15. Der Pilotschirm PS und die Druckfeder 15 werden gemeinsam durch eine Abdeckhaube 13 abgedeckt, an deren beiden, einander gegenüberliegenden Seiten jeweils eine Verschlußschlaufe 17 befestigt ist.

Beim Zusammenpacken des Pilotschirms PS mit dem Reservefallschirm RS werden die Verschlußschlaufen 17 durch Ösen 18 an den Verpackungsklappen 11,1, 11,2, und 11,3 sowie durch den zusammengelegten Reservefallschirm RS hin-. durch zum Boden 19 der Verpackung 11 geführt, wo die Verschlußschlaufen 17 durch weitere Ösen 20 nach außen geführt werden. Dort werden durch die offenen Enden der Verschlußschlaufen 17 jeweils Auslösestifte 21 hindurchgesteckt, die mittels eines gemeinsamen, jedoch verzweigten Zugkabels 23 miteinander verbunden sind, das zu einem Kabelschutzschlauch 25 führt, der am Gurtzeug der Verpackung 11 angeordnet ist. Das Verbindungskabel 23 führt zu einem Auslösehandgriff 27.

Beim Verpacken des Reservefallschirms muß nicht nur dieser zusammengelegt und die Verpackung 11 um diesen herumgelegt werden, sondern es muß der Pilotschirm PS zusammengelegt und die Druckfeder 15 mittels der Abdeckhaube 13 von Hand komprimiert werden, damit die Verschlußschlaufen 17 durch die Ösen 18 an der Oberseite und durch das ganze Paket hindurch bis zum Boden 19 geführt werden können. Diese Arbeit ist recht umständlich und beschwerlich und ohne Spezialwerkzeug kaum zu bewerkstelligen. Die Verschlußklappe 11,1 hat im allgemeinen zwei Ösen 18, und die gegenüberliegende, nicht dargestellte vierte Verschlußklappe hat ebenfalls zwei entsprechende Ösen 18. Die beiden Verschlußklappen 11,2 und 11,3 kommen mit je einer Öse 18 aus, so daß insgesamt an der Oberseite der Verpackung 11 die beiden Verschlußschlaufen 17 durch sechs Ösen 18 hindurchgeführt werden müssen. Zusammen mit den beiden Ösen 20 am Boden 19 müssen also die Verschlußschlaufen 17 durch insgesamt acht Ösen gefädelt werden, bevor die Auslösestifte 21 zum Zusammenhalten und zum Sichern der Verpackung eingeführt werden können. Dabei ist auch ein Wenden der Verpackung 11 nötig, damit der Boden 19 zugänglich ist.

Die beiden Verschlußschlaufen 17 sind an der Abdeckhaube 13 an diametral gegenuberliegenden Stellen befestigt. Sie können auch einstückig miteinander ausgebildet sein, so daß dann ein Verbindungsstück zwischen den beiden Schlaufen 17 längs der Abdeckhaube 13 durchlaufen und dort angenäht sein könnte. Somit übernimmt die Abdeckhaube 13 gemeinsam mit den beiden Verschlußschlaufen 17 im verschlossenen Zustand die Fixierung und Stabilisierung des Pilotschirms und hält den Reservefallschirm fest in der Verpackung 11. Im verschlossenen Zustand ist nicht überprüfbar, ob die Verschlußschlaufen 17 einwandfrei an der Abdeckhaube 13 befestigt sind oder ob beispielsweise durch Aufscheuern Schwachstellen entstanden sind, die zu einem Abreißen der Verschlußschlaufen 17 von der Abdeckhaube 13 führen könnten. In einem solchen Fall würde sich durch Entspannen der Feder 15 der Pilotschirm PS ungewollt öffnen. Es ist auch nicht sichergestellt, daß im verschlossenen Zustand die beiden Verschlußschlaufen 17 genau um 180° diametral einander gegenüber und genau mittig über der Druckfeder 15 liegen. In jedem Fall ist beim Lösen der Auslösestifte 21 und beim Freigeben der Schlaufen 17 die Gefahr gegeben, daß sich die Druckfeder 15 beim Entspannen verkantet und den Pilotschirm PS nicht exakt in der gewünschten Richtung auswirft. Schließlich ist wegen der Führung der Verschlußschlaufen 17 durch die beiden einander gegenüberliegenden Gruppen von Ösen 18 eine Kompatibilität mit Flächenreserven sehr eingeschränkt.

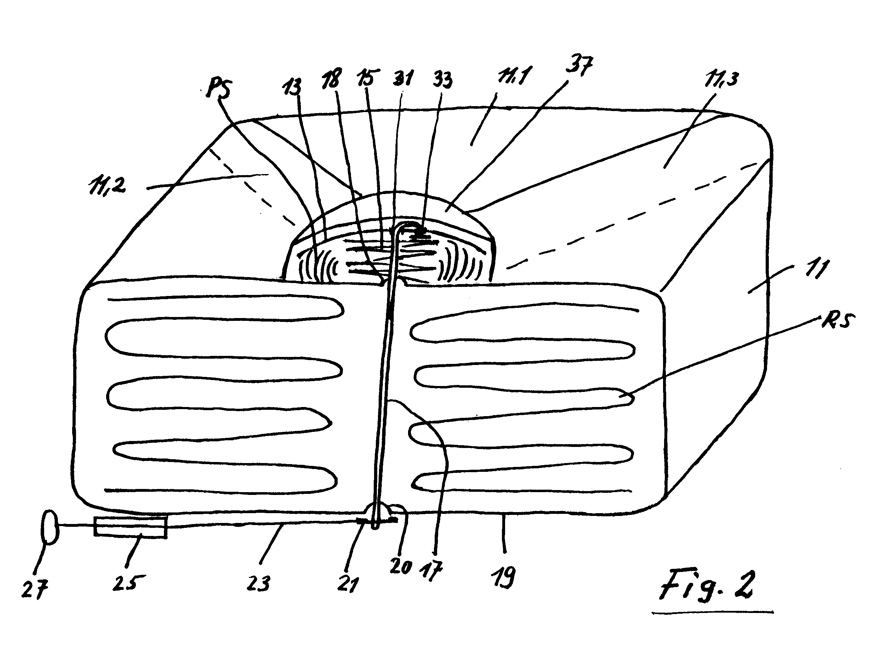

In Fig. 2 ist die erfindungsgemäße Anordnung schematisch veranschaulicht. Gleiche oder entsprechende Teile sind mit den gleichen Bezugszeichen gekennzeichnet, so daß die Beschreibung dieser Teile nicht im einzelnen wiederholt werden muß.

Gemäß Fig. 2 ist statt zweier seitlich der Abdeckhaube 13 angeordneter Verschlußschlaufen 17 nur eine einzige solche Verschlußschlaufe 17 vorgesehen, die zentral angeordnet ist. Diese Verschlußschlaufe 17 erstreckt sich zentral durch die Druckfeder 15 hindurch zur Mitte der Abdeckhaube 13, wo sie verankert ist. Infolgedessen ist es nur nötig, die Verschlußschlaufe 17 durch eine einzige Gruppe von Ösen 18 an der Oberseite der Verpackung 11 zu führen, wobei für jede der vier Verschlußklappen infolge der zentralen Anordnung eine einzige Öse ausreicht. Es ist also nicht mehr notwendig, bei der Verschlußklappe 11,1 und der gegenüberliegenden, nicht gezeigten vierten Verschlußklappe jeweils zwei Ösen 18 vorzusehen.

Am Boden 19 der Verpackung 11 ist gemäß Fig. 2 nur eine einzige Öse 20 vorhanden, durch die die Verschlußschlaufe 17 hindurchgeführt wird. Unterhalb des Bodens 19 wird die Verschlußschlaufe 17 mittels eines einzigen eingesteckten Auslösestifts 21 gesichert, der wiederum über ein einziges Auslösekabel 23 zu einem Auslösehandgriff 27 führt.

Infolge der zentralen Anordnung der Verschlußschlaufe 17, die die Druckfeder 15 in der Mitte durchsetzt, ist beim Auslösen sichergestellt, daß die Druckfeder 15 sich genau längs ihrer Achse entspannt und den Pilotschirm PS exakt in der gewünschten Richtung auswirft. Außerdem ist durch die verminderte Zahl von Ösen 18 und 20 das Zusammenlegen und Verpacken des Reservefallschirms RS zusammen mit dem Pilotschirm PS vereinfacht und erleichtert, so daß insgesamt die Handhabung gegenüber der bekannten Ausbildung verbessert und vereinfacht ist. Eine seitliche Verlagerung oder ein Kippen der Druckfeder beim Entspannen ist verhindert. Die Druckfeder 15 wird durch verhältnismäßig steife Ausbildung der Abdeckhaube 13 exakt in ihrer Lage gehalten. Durch Änderung der Größe der Abdeckhaube 13 können unterschiedlich große Pilotschirme PS leicht untergebracht werden, da für deren Verpackungsraum keine seitliche Begrenzung besteht. Die gesamte Anordnung läßt sich auch ohne Spezialwerkzeug leicht verpacken und sichern.

Vorzugsweise besteht die Abdeckhaube 13 aus einer gewölbten Abdeckkappe, an der die Verschlußschlaufe 17 befestigt ist. Die Abdeckkappe 13 kann aus Metall oder Kunststoff bestehen. Vorzugsweise wird glasfaserverstärkter Kunststoff verwendet, der für die Halterung und Stabilisierung der Druckfeder 15 ausreichend starr, andererseits aber von geringem Gewicht ist. Die Abdeckhaube 13 kann, muß aber nicht mit der Feder 15 des Pilotschirms PS verbunden sein.

Die Verschlußschlaufe 17 ist bei dem dargestellten Ausführungsbeispiel von innen durch eine zentrale Öse 31 an der Abdeckkappe 13 hindurch nach außen geführt, dort zur Seite umgelenkt und durch eine zweite, in der Nähe liegende Öse 33 wieder zum Inneren der Abdeckkappe 13 zurückgeführt und dort verankert, beispielsweise durch einen Knopf, der größer ist als die Öffnung der Öse 33.

Schließlich kann vorteilhafterweise die Abdeckhaube 13 zusätzlich durch eine abnehmbare äußere Schutzhaube 37 abgedeckt sein. Diese Schutzhaube 37 kann flexibel sein, beispielsweise aus Textilmaterial bestehen und gegebenenfalls gepolstert sein. Auf die Verpackung 11 einwirkende Stöße können somit nicht die ordnungsgemäße Anordnung des zusammengelegten Pilotschirms beeinflußen und somit nicht dessen Funktionsfähigkeit beeinträchtigen. Da die Schutzhaube 37 jedoch abnehmbar ist, kann ohne weiteres überprüft werden, ob die Verschlußschlaufe 17 ordnungsgemäß und unbeschädigt an der Abdeckkappe 13 befestigt ist, ohne daß die Abdeckkappe 13 selbst abgenommen und die Druckfeder 15 entspannt werden müßte. Durch die Abdeckkappe 13 wird der Druck der Druckfeder 15 gleichmäßig radial verteilt, so daß ein ordnungsgemäßer Öffnungsvorgang beim Herausziehen des Auslösestifts21 und bei der darauf folgenden Freigabe der Verschlußschlaufe 17 gewährleistet ist, die durch die Druckfeder 15 nach oben herausgezogen wird.

Durch zentrale Anordnung der Verschlußschlaufe 17 an der Abdeckkappe 13 wird die Möglichkeit des Aufscheuerns der Verschlußschlaufe 17 vermieden, die bisher bei der bekannten Anordnung am Rand der Abdeckhaube 13 gegeben war. Der Schutz der Verschlußschlaufe 17 wird durch die abnehmbare Abdeckhaube 37 verbessert, durch die aber gleichzeitig eine Kontrolle der Verschlußschlaufe 17 auf Abnutzung ermöglicht ist. Bei Benutzung des Reservefallschirms RS, also beim Lösen des Stifts 21 und bei Freigabe des Pilotschirms PS bleibt die Schutzhaube 37 auf der Abdeckkappe 13; die Schutzhaube 37 muß also vor dem Absprung des Fallschirmspringers nicht von der Abdeckkappe 13 gelöst werden.

Insgesamt ergibt sich also gegenüber der bekannten Anordnung gemäß Fig. 1 bei der erfindungsgemäßen Anordnung gemäß Fig. 2 eine wesentliche konstruktive Vereinfachung, eine Erleichterung der Handhabung beim Verpacken, eine genauere Stabilisierung der Druckfeder 15 im unbenutzten Zustand, eine bessere Entspannung der Druckfeder 15 beim Lösen mit der Folge eines besseren Auswurfs des Pilotschirms PS und schließlich auch ein vereinfachtes und sichereres Auslösen dadurch, daß nur ein einziger Auslösestift 21 herausgezogen werden muß.

## Patentansprüche

1. Reservefallschirm (RS) mit einem Hilfs- oder Pilotschirm (PS) der - im unbenutzten Zustand - außerhalb der Verpackung (11) des Reservefallschirms (RS) unter einer Abdeckhaube (13) zusammengelegt gehalten ist, die gleichzeitig eine außerhalb der Verpackung (11) angeordnete Druckfeder (15) abdeckt, wobei an der Abdeckhaube (13) Verschlußschlaufen (17) angreifen, die sich sowohl durch den zusammengelegten Pilotschirm (PS) als auch durch den zusammengelegten Reservefallschirm (RS) und dessen Verpackung (11) hindurch erstrecken, die die Druckfeder (15) im komprimierten Zustand halten und die an dem dem Rücken eines Fallschirmspringers zugekehrten Boden (19) der Verpackung (11) des Reservefallschirms (RS) durch dort vorgesehene, herausziehbare Auslösestifte (21) gehalten sind, **dadurch gekennzeichnet,** daß an der Abdeckhaube (13) eine einzige Verschlußschlaufe (17) zentral angreift, die sich zentral durch die Druckfeder (15) hindurch erstreckt, und daß die Verschlußschlaufe (17) am Boden (19) der Verpackung (11) durch einen einzigen Auslösestift (21) gehalten ist.

2. Reservefallschirm nach Anspruch 1, **dadurch gekennzeichnet,** daß die Abdeckhaube (13) durch eine steife Abdeckkappe, z.B. aus Metall oder Kunststoff, insbesondere glasfaserverstärkter Kunststoff, gebildet ist.

3. Reservefallschirm nach einem der vorhergehenden Ansprüche, **dadurch gekennzeichnet,** daß die Verschlußschlaufe (17) an der Abdeckhaube (13) durch eine zentrale Öse (31) von innen nach außen geführt, umgelenkt und durch eine zweite Öse (33) wieder nach innen geführt und dort verankert ist.

4. Reservefallschirm nach einem der vorhergehenden Ansprüche, **dadurch gekennzeichnet,** daß die Abdeckhaube (13) durch eine abnehmbare äußere Schutzhaube (37) abgedeckt ist, die flexibel und gegebenenfalls gepolstert ist.

## Claims

1. Reserve parachute (RS) with an auxiliary or pilot chute (PS), which - in unused condition - is held folded up underneath a cover (13) outside the container (11) of the reserve parachute (RS), the cover at the same time covering a compression spring (15) located outside the container (11) with through-loops (17) attached to the cover (13), the loops extending through the folded up pilot chute (PS) as well as through the folded up reserve parachute (RS) and its container (11) while holding the compression spring (15) in compressed condition, and which loops are held to the bottom (19) of the reserve parachute's (RS) container (11), facing the back of a parachute jumper, by pull-out release pins (21) provided at the bottom, **characterized in that** the cover (13) has one single through-loop (17) attached to its center and extending centrally through the compression spring (15), and the through-loop (17) is held to the bottom (19) of the container (11) by one single release pin (21).

2. Reserve parachute according to claim 1, **characterized in that** the cover (13) is made of a rigid covering cap, e.g. made of metal or synthetic material, especially glass fiber reinforced synthetic material.

3. Reserve parachute according to one of the foregoing claims, **characterized in that** the through-loop (17) is lead through a central grommet (31) in the cover (13) from the inside to the outside, then diverted and brought back through a second grommet (33) to the inside where it is secured.

4. Reserve parachute according to one of the foregoing claims, **characterized in that** the cover (13) is covered by a removable outer flexible protective cap (37) which may also be padded.

## Revendications

1. Parachute de réserve (RS) muni d'un parachute pilote ou extracteur (PS), qui est plié hors du sac (11) de l'extracteur (RS), en condition inutilisé, sous un couvercle (13) couvrant en même temps une ressort comprimée (15) qui est arrangée hors du sac (11), avec des loops (17) attachés au couvercle (13), lesquelles s'étendent au travers de l'extracteur (PS) plié ainsi qu'au travers de la parachute de réserve (RS) pliée et son sac (11) et qui retiennent la ressort (15) en condition comprimée et qui sont tenus par des aiguilles (21) retractables arrangées au fond (19) du sac (11) de la parachute de réserve de ce côté du fond qui est tourné vers le dos d'un parachutiste, **caractérisée en ce** qu'un seul loop (17) est attaché centralement au couvercle (13), qui s'étend centralement au travers de la ressort (15), et en ce que le loop (17) est tenu au fond (19) du sac (11) par une seule aiguille (21).

2. Parachute de réserve selon la revendication 1, **caractérisée en ce** que le couvercle (13) est formé d'un capuchon rigide, par exemple en métal ou en matière plastique, spécialement plastique renforcé de fibre de verre.

3. Parachute de réserve selon l'une des revendications susdites, **caractérisée en ce** que le loop (17) au couvercle (13) mène au travers d'un oeillet (31) central de l'intérieur à l'extérieur, est retourné et rammené au travers d'un seconde oeillet (33) vers l'intérieur où il est attaché.

4. Parachute de réserve selon l'une des revendications susdites, **caractérisée en ce** que le couvercle (13) est couvert d'un bonnet de protection (37) extérieur, démontable, qui est flexible et rembourrée, le cas échéant.
